Europäisches Patentamt

(19) European Patent Office

Office européen des brevets

(11) Publication number: **0 085 885**
**A2**

(12) **EUROPEAN PATENT APPLICATION**

(21) Application number: **83100616.8**

(22) Date of filing: **25.01.83**

(51) Int. Cl.³: **B 29 F 1/10**

(30) Priority: **08.02.82 US 346962**

(43) Date of publication of application:
**17.08.83 Bulletin 83/33**

(84) Designated Contracting States:
**AT BE CH DE FR GB IT LI LU NL SE**

(71) Applicant: **ABBOTT LABORATORIES**
**14th Street and Sheridan Road**
**North Chicago, Illinois 60064(US)**

(72) Inventor: **Rains, Orville Eugene**
**4150 Harper**
**Gurnee Illinois 60031(US)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Method and apparatus for insert molding of a bacterial filter.**

(57) An apparatus and process for injection molding an article having a media portion integrally molded therein comprises a female mold member (18) and a male mold member (16) reciprocally mounted relative to the female mold member (18), and adapted for mating engagement therewith. Mechanical means are provided for moving the male and female mold (16,18) together to form a molding cavity for the article to be molded. An ejector tube (20) is telescopically disposed within the female mold member (18) for expelling the article from the mold following molding. During molding, a die cut mechanism (22), formed on the end of the ejector tube (20), die cuts a section from a media strip disposed within the female mold (18). A core pin (26) telescopically disposed within the ejector tube (20) then moves the die cut section to a second position within the mold where the plastic is injection molded about the die cut section to form a modular filter assembly.

*FIG. 2*

0085885

-1-   TITLE

see front page

This invention relates generally to a process and apparatus for injection molding thermoplastic articles having an insert molded media portion.   In particular, the apparatus is designed for manufacturing air vent filters for needles used in intravenous infusion.

Prior art patents, such as U.S. Patent No. 4,161,504 to Baldini, describe a process for making a filter element for use in intravenous infusions by positioning a filter fabric between two half molds and then injecting plastic material into the two half molds to provide a tubular filter element transected by the filter fabric.   In order to promote bonding between the fabric and the plastic, the half molds are provided with spaced cutting knives arranged peripherally about the mold in such a position as to penetrate the fabric at a plurality of spaced portions when the mold is closed with the fabric between the mold halves.   However, the apparatus described utilizes a substantial quantity of filter material in order to produce a limited number of tubular filters.   In addition, the connection between the two tubular halves of the filter is weakened by the limitation of the connection being only through the perforated portions of the filter.

U.S. Patent 3,534,443, Tucker, mentions an injection molding apparatus including male and female mold parts reciprocally mounted.   The male mold part has severable sections reciprocally mounted relative to the remainder of the mold part; (the male mold part opens when separated from the female mold part).   The apparatus is operated by an injector rod driven by an injector support reciprocally moveable relative to the male mold part.   An ejector bar driven by the ejector support removes the molded article from the male mold part following molding.

Alternatively, a method of manufacturing a filter element comprises the steps of:

(1)    molding the filter support;

(2)    alignment of the filter element on the support;

(3)    application of pressure to hold the element on the support; and

(4)    overmolding of the periphery of the element to seal the edge of the element to the support.

The March 1977 issue of Plastic Design and Processing includes an article entitled "Now You Can Punch, Form and Encapsulate Any New Multipurpose Injection Mold." The article teaches the method of manufacture including the following steps:

"(a)    the mold opens, ejecting molded part and advancing strip of transparent plastic for next punching molding cycle;

(b)    the mold closes at the parting line;

(c)    as mold continues to close at parting line an insert is stamped out of the strip by the bottom punch. The insert is held securely by the bottom punch and a spring loaded plunger as the injected plastic enters the cavity and encapsulates the the insert;

(d)    the mold opens at the parting line while the spring loaded plunger keeps the molded part on the ejector half of the mold;

(e)    the mold continues to open until pull bars are engaged, then the mold opens on the ejector half until the bottom punch is below the plastic strip;

(f)    the part is then hydraulically ejected and a new cycle begins."

The present invention differs from the previously described prior art in that a "pierced-out" filter is transported following die cutting into the cavity chamber where it is encapsulated in thermoplastic material so as to form a modular filter assembly. The present apparatus also utilizes the ejector sleeve as a punch for die cutting the filter material, unlike the prior art.

The present invention comprises generally, an apparatus for injection molding a thermoplastic article having an insert molded media portion contained therein. In particular, the invention is directed to a multi-stage, reciprocal motion mold for injection molding such articles, and articles, such as modular filter assemblies, produced thereby.

The apparatus generally comprises a female mold member and a male mold member reciprocally mounted relative thereto and adapted for mating engagement therewith. The male and female mold members have cavities formed therein of a shape designed to form the thermoplastic article. A hydraulic piston forces the male and female mold halves together. An ejector mechanism expels the article from the apparatus following molding. The ejector preferably comprises a tube telescopically disposed within the mold, the tube being hydraulically or mechanically extended through the mold following molding so as to expel the article therefrom.

Integral with the ejector tube, at one end, is a die cutting mechanism which die cuts a piece of media (filter) from a media strip disposed through the female mold. Following cutting, a core pin slidably disposed within the ejector tube moves the piece of media strip to a second position further within the mold where heated thermoplastic resin is injected around it, thereby forming a modular thermoplastic article. This is done using conventional injection molding equipment; a reciprocating screw injection system.

In order to hold the portion of media strip during die cutting and during movement within the mold, extending perpendicularly from the male mold member is a rigid support shaft. The shaft is movable relative to the female mold so that it may be selectively positioned within the male mold so as to support the media strip during die cutting or assisting in moving of the die cut portion of the media strip within the mold.

Generally, the present device may be characterized as a multi-stage, reciprocal motion mold. The stages of the mold are mounted on a plurality of tubular slide members. The stages include the previously described male and female mold member, a base for supporting and moving the ejector tube, a base for supporting and moving the core pin, and a base for supporting and moving the rigid support shaft.

In a preferred embodiment, the previously mentioned die cut mechanism comprises a beveled surface circumscribing the distal end of the tubular shaft, constructed and arranged for puncturing and thereby die cutting the media strip disposed through the mold. A gripper plate reciprocally mounted within the female mold compresses against and fixes the media strip when the male and female mold members are abutted against each other. The gripper plate has an axial tubular port designed for telescopic reception of the tubular ejector shaft therethrough. The tubular shaft has an inside diameter slightly larger than the outside diameter of the rigid support shaft. As a result, the rigid support shaft may be abutted against the media strip proximate the tubular port and the tubular ejector shaft forced through the tubular port, the media strip and about the rigid support shaft. The beveled surface of the distal end of the tubular ejector shaft thereby cuts a portion of the media strip. The die cut portion of the media strip is retained in that position between the core pin and the rigid shaft.  In order to facilitate this, the rigid support shaft includes a flattened distal end adapted for abuttment against the core pin.

The method of making the aforementioned thermoplastic article comprises the following steps: Two mold halves are provided, each of which is shaped internally so as to produce a portion of the article.  A media strip is provided which extends through an appropriately shaped slot in one of the mold halves. The mold halves are closed together and the media strip is gripped.  The media strip is then die cut so as to form a media portion.  The media portion is moved within the mold to a new position.  Thermoplastic material is then injected into the mold halves so as to form the thermoplastic article.  The article and mold are then cooled, the mold opened, and the article ejected.

In a preferred embodiment, the aforementioned apparatus and method are performed using a mechanism which contains a plurality of cavities for the simultaneous molding of a plurality of thermoplastic articles.  In order to accomplish this, a plurality of ejector means, die cut means, and core pin means for simultaneously molding the plurality of articles is provided.  The apparatus further includes a mechanism for advancing the media strip after the completion of each molding cycle.  This advancement mechanism preferably comprises an output reel having media strip wound thereon, a take-up reel oppositely disposed from the output reel with the media strip disposed through the mold between the take-up reel and the output reel. A mehanical winding mechanism is provided which advances the media strip a predetermined distance following completion of each molding cycle.

The thermoplastic article previously mentioned preferably comprises a hydrophobic air vent for intravenous needles.  The assembly comprises an upper tubular portion, and a lower tubular portion axially aligned therewith, but smaller in diameter than the upper tubular portion. The upper tubular portion has an annular rim disposed proximate the junction with the lower tubular portion. The circular hydrophobic filter, normally comprising porous polyethylene terepthalate, is disposed within the upper tubular portion and sealed about its periphery to the annular rim.

FIGURE 1 of the drawings is a side perspective view of an apparatus for injection molding a thermoplastic article having an insert molded media portion contained within the article.

FIGURE 2 of the drawings is a horizontal section of one portion of the apparatus for injection molding of FIGURE 1 showing in particular male and female mold sections in an open configuration.

FIGURE 3 of the drawings is a horizontal section of one portion of the male mold member of FIGURE 2 showing in particular a media strip, ejector pin and core pin axially disposed within the male mold.

FIGURE 4 of the drawings is a horizontal section of one portion of the injection molding apparatus of FIGURE 1 showing in particular the male and female mold halves in a closed configuration.

FIGURE 5 of the drawings is a horizontal section of one portion of one portion of the male mold member of FIGURE 4 showing in particular the ejector pin having a die cutting surface piercing the media strip and die cutting a portion thereof.

FIGURE 6 of the drawings is a horizontal section of one portion of the injection molding apparatus of FIGURE 1 showing in particular the core pin and rigid support shift cooperating in movement of the die cut media portion within the mold and the partial withdrawal of the ejector tube from the female mold member.

FIGURE 7 of the drawings is a horizontal section of one portion of the central portion of the injection molding apparatus of FIGURE 1 showing in particular the positioning of the die cut media portion between the support shaft and the core pin with the ejector tube partially withdrawn.

FIGURE 8 of the drawings is a horizontal section of one portion of the injection molding apparatus of FIGURE 1 showing in particular the male and female mold members separated after injection molding of the thermoplastic article.

FIGURE 9 of the drawings is a horizontal section of one portion of the central portion of the male mold member of FIGURE 8 showing in particular the thermoplastic article having a die cut media portion injection molded therein, the article being affixed on the core pin.

FIGURE 10 of the drawings is a horizontal section of one portion of the injection molding apparatus of FIGURE 1 showing in particular the ejector tube being used to eject the thermoplastic article from the female mold member.

FIGURE 11 of the drawings is a side perspective view of the injection molding apparatus of FIGURE 1 showing in particular a plurality of male and female cavities, ejector tubes, core pins, and rigid support shafts.

FIGURE 12 of the drawings is a side perspective view of the media strip winding mechanism shown in FIGURE 1 of the drawings.

FIGURE 13 of the drawings is a rear perspective view partially cut away of an insert molded bacterial filter.

FIGURE 14 of the drawings is a front perspective view of the insert molded bacterial filter of FIGURE 13.

FIGURE 15 of the drawings is a side view partially cut away of a conventional reciprocating screw injection system.

FIGURE 16 of the drawings is a vertical section of a conventional hydraulic clamp system.

FIGURES 17 and 18 of the drawings are side views of a conventional horizontal injection molding machine.

While this invention is susceptible of embodiment in many different forms, there is shown in the drawings and will herein be described in detail, several specific embodiments with the understanding that the present disclosure is to be considered as an exemplification of the principles of the invention and is not intended to limit the invention to the embodiments illustrated.

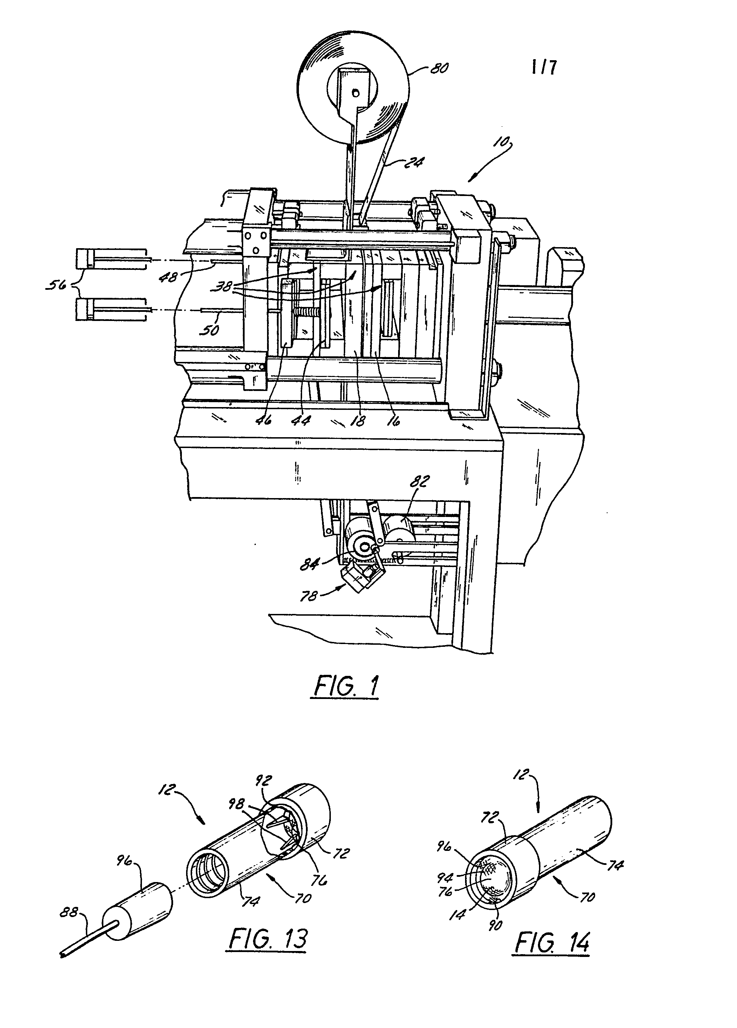

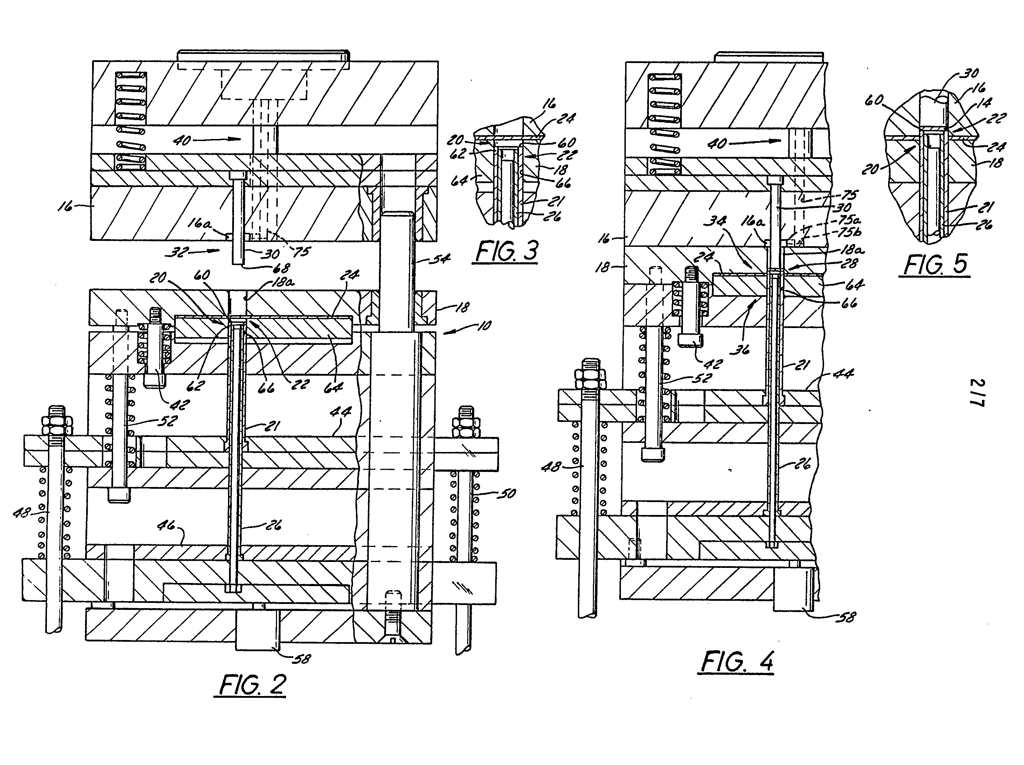

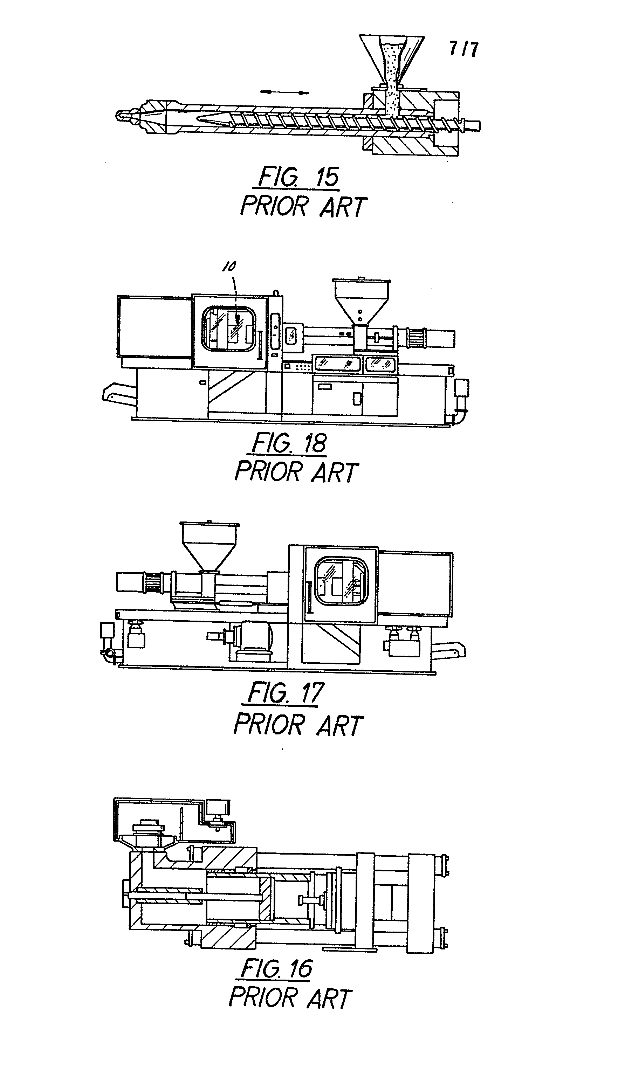

As best seen in FIGURE 1 of the drawings, the present invention comprises an injection molding apparatus generally 10 for molding a thermoplastic article 12 (best seen in FIGURE 14) having an insert molded media portion 14 contained therein. Apparatus 10 comprises a male mold member 16 reciprocally mounted relative to a female mold member 18, male mold member 16 being adapted for mating engagement with female mold member 18. Male mold member 16 and female mold member 18 may best be seen in FIGURE 2 of the drawings.

Further seen in FIGURE 2 is ejector mechanism 20 which is axially disposed through female mold member 18 and is designed for expelling thermoplastic article 12 from apparatus 10 following molding thereof. Integral with ejector mechanism 20 is die cut mechanism 22 which is constructed for die cutting insert molded media portion 14 from media strip 24. Media strip 24 is disposed through female mold member 18. Core pin mechanism 26 is telescopically disposed within ejector mechanism 20 and is designed for moving insert molded media portion 14 within apparatus 10 to a selected position 28 (FIGURE 4) following die cutting, whereupon article 10 is injected molded about the media portion 14.

Further seen in FIGURE 2 is rigid support shaft 30 which extends perpendicularly from male mold member 16. Male mold member 16 is reciprocally mounted relative to female mold member 18 so as to allow axial movement of rigid support shaft 30. As a result, rigid support shaft 30 may be selectively positioned within female mold member 18 in a first position 32 proximate die cut mechanism 22, thereby cooperating with die cut mechanism 22 in die cutting media strip 24. In a second position 34, rigid support shaft 30 cooperates with core pin 26 in positioning of insert molded media portion 14 within male mold member 16 during injection molding. To assist in these operations, female mold member 18 is slidably displaceable relative to die cut mechanism 22 when abuted against male mold member 16. This slidable displacement 36 of female mold member 18 forces die cutting mechanism 22 through media strip 26, thereby die cutting insert molded media portion 14 from media strip 26.

The present invention may be further described as a multi-stage reciprocal motion mold 38 for injection molding thermoplastic articles such as article 12 or other thermoplastic articles which require an insert of a different material than the thermoplastic article. The primary stages of multi-stage reciprocal mold 38 are male mold member 16 and female mold member 18. One method of effecting reciprocal motion of male mold member 16 is through the use of a slide mechanism 40 which allows male mold 16 to be selectively advanced or retract male mold member 16. Female mold member 18 is constructed for abutment against and enclosure of portions of male mold member 16. Mechanism 42 is provided for effecting this reciprocal motion of female mold member 18 relative to male mold member 16.

Previously mentioned ejector mechanism 20 is constructed for expelling thermoplastic article 12 from mold 38 following molding. In order to support ejector mechanism 20, an ejector base 44 is provided. Ejector base 44 is movable so as to selectively effect reciprocal movement of ejector mechanism 20 as required. Integrally formed on ejector mechanism 20 is die cut mechanism 22, constructed and arranged for die cutting a media strip 24 disposed within mold 38. A core pin 26 is telescopically disposed within ejector mechanism 20 and is constructed for reciprocal motion therein. Core pin 26 is designed to effect selective movement of insert molded media portion 14 from its initial position 28 following die cutting to a second selected position 45 which is adapted for injection molding of thermoplastic article about media portion 14. In order to effect this reciprocal motion, core pin 26 is provided with a core pin base 46 which alternately provides fixed support, or effects reciprocal movement, of core pin 26.

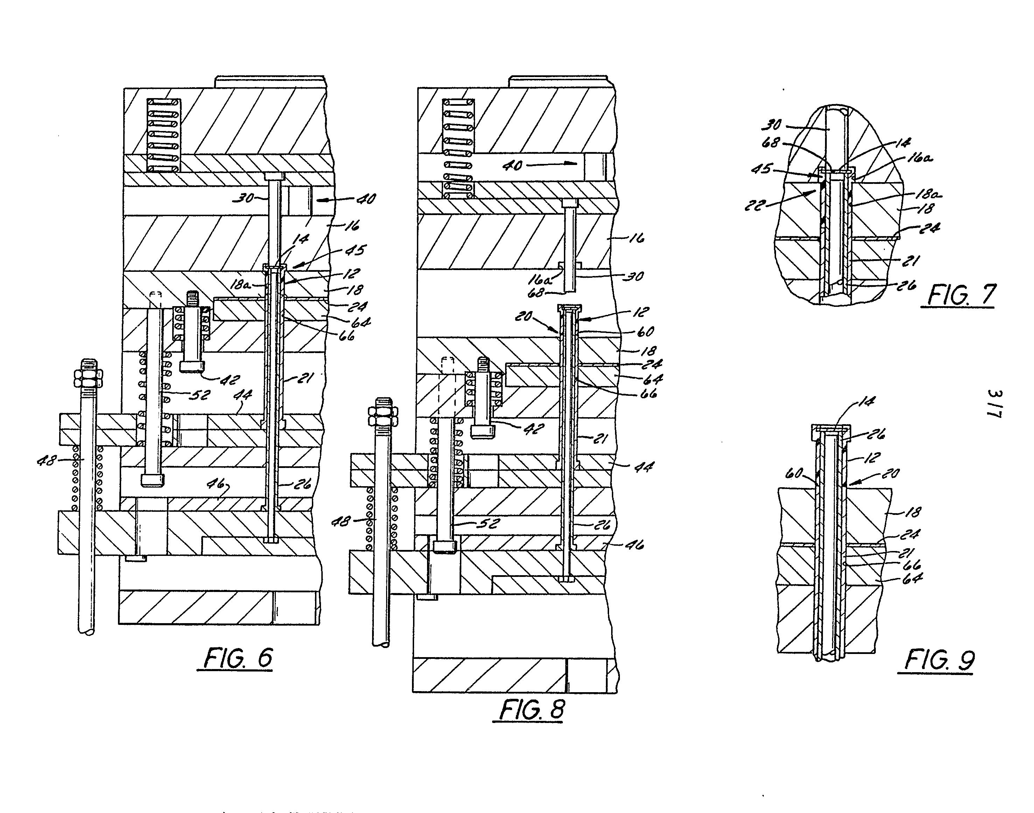

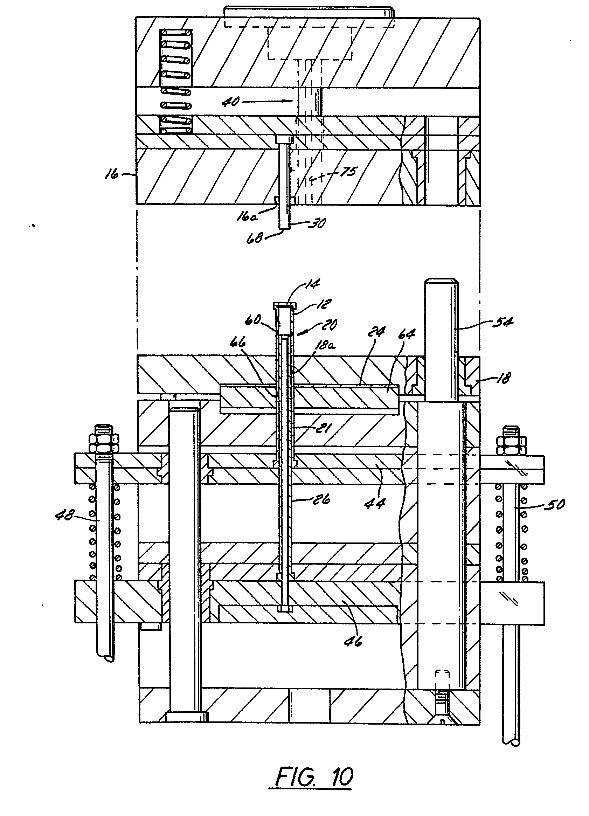

Rigid support shaft 30 extends axially (perpendicularly), from male mold member 16 and is moveable in conjunction therewith. Rigid support shaft 30 supports die cut media portion 14 during die cutting and during movement of die cut media portion 14 within mold 38. As a result, media portion 14 may be die cut and moved to selected position 45 (FIGURE 6) and thermoplastic article 12 injection molded thereabout (FIGURE 8). As further seen in FIGURES 2, 4, 6, 8 and 10, the mechanism 42 for effecting reciprocal motion of male mold member 16 and female mold member 18 comprises a plurality of tubular slide members 48, 50, 52 and 54, which have male mold member 16 and female mold member 18 axially mounted thereon. Slide members 48, 50, 52 and 54 allow selective reciprocal movement of male mold member 16 and female mold member 18 during cycling of multi-stage reciprocal motion mold 38. In this regard, ejector base 44 and core pin base 46 are slidably mounted on tubular slide members 48 and 50, so as to allow reciprocal motion of ejector mechanism 20 and core pin 26.

Further provided is mechanical mechanism 56 (best seen in FIGURE 1), which in this embodiment is shown as a pair of pistons which selectively advance or retract tubular slides 48 an 50 so as to effect movement of ejector base 44. A third piston 58, which is an additional portion of mechanical mechanism 56 effects selective reciprocal movement of core pin base 46.

As seen in FIGURES 2, 4, 6 and 8, ejector mechanism 20 preferably comprises a tubular shaft 21 extending telescopically into female mold member 18. Shaft 21 is of the proper size and configuration to slide through female mold 18 following injection molding of thermoplastic article 12. This slidable movement ejects thermoplastic article 12 from mold 38 after male mold member 16 is separated from female mold member 18.

Integrally formed on and circumscribing distal end 62 of tubular shaft 21 is a beveled surface 60 which is sufficiently sharp and is of a hard enough material to die cut media strip 24. Beveled surface 60 is an integral portion of die cut mechanism 22. In order to hold media strip 24 in place during die cutting, a gripper plate 64 is reciprocally mounted within female mold member 18. When male mold member 16 compresses against female mold member 18, gripper plate 64 compresses against media strip 24. Gripper plate 64 has an axial tubular port 66 therethrough which is arranged for telescopic reception of tubular shaft 21, thereby allowing beveled surface 60 to pierce media strip 24. Tubular ejector shaft 21 has an inside diameter slightly larger than the outside diameter of rigid support shaft 30. As a result, rigid support shaft 30 may be abuted against media strip 24 proximate tubular port 66 and tubular ejector shaft 21 forced therethrough (through tubular port 66 and media strip 24). Tubular ejector shaft 21 thereupon telescopically engages rigid support shaft 30. In the die cutting cycle, core pin 26 moves in conjunction with tubular ejector shaft 21 so that as shaft 21 telescopically engages rigid support shaft 30, die cut media portion 14 is gripped between core pin 26 and rigid support shaft 30. To facilitate this, rigid support shaft 30 includes a flattened distal end 68 which is adapted for abutment against core pin 24.

As best seen in FIGURES 13 and 14 of the drawings, thermoplastic article 12 preferably comprises an insert molded filter 70 having an upper tubular portion 72 and a lower tubular portion 74 with filter fabric 76 disposed intermediate upper tubular portion 72 and lower tubular portion 74.

In addition to the previously described apparatus, the present invention comprises a process for making filter 70. The process comprises the steps of

providing two half molds 16 and 18, each of which is shaped internally so as to produce respectively, upper tubular portion 72 and lower tubular portion 74. Further provided is a die cutting mechanism which projects into the interior of one of said mold halves. A filter fabric 24 is positioned through mold half 16, mold half 18, or between mold halves 16 and 18 (FIGURE 2). Mold halves 16 and 18 are then closed together. Fabric 24 is then pentrated die cut by die cutting mechanism 22 (FIGURE 4). Following die cutting, the die cut portion of fabric 14, is gripped between a slidable core pin 26 and a selectively moveable support shaft 30, each of which is linearly aligned to the other and axially aligned within the mold. Die cut fabric 14 is then moved within the mold to a desired position 45 by means of slidable movement of core pin 26 and rigid support shaft 30 (FIGURE 6). Plastic material is then injected about filter fabric 14 within mold halves 16 and 18 so as to form an injection molded filter 70 (FIGURE 8). This is accomplished by means of molten plastic being hydraulically injected through port 75 along channels 75a and 75b into cavities 16a and 18a (FIGURE 4). Both the channeling of plastic through port 75 and the method of injecting the plastic (reciprocating screw) as in FIGURE 15, are conventional. Filter 70 and mold 38 are then cooled, mold 38 is opened and filter 70 is ejected. This is accomplished using a conventional reciprocating screw injection system, as seen in FIGURE 15 of the drawings. Similarly movement of mold halves 16 and 18 is accomplished by means of a conventional hydraulic clamp system in a conventional horizontal injection molding machine. (FIGURES 16 and 17 and 18)

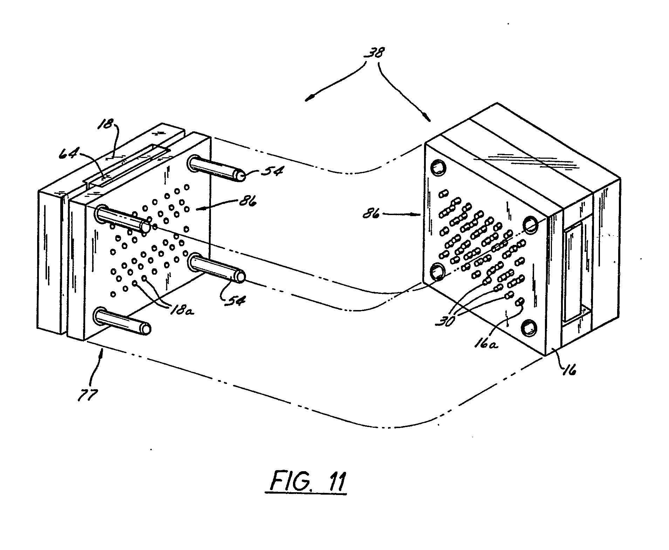

The aforementioned description of the apparatus and method of producing thermoplastic articles, preferably in the form of injection molded filters, describes a single cavity mold. In production, a multi-cavity mold 77 is provided (best seen in FIGURE 11 of the drawings), which simultaneously molds a plurality of thermoplastic articles 12. In order to accomplish such molding, a plurality of ejector mechanisms 20, die cut mechanisms 22 and core pin mechanisms 26 are provided which simultaneously molds the plurality of thermoplastic articles 12. The plurality of ejector means 20, die cut means 22 and core pin means 26 are preferably arrayed in a linear array 86 across mold 38 so as to utilize a substantial portion of media strip 24 upon each molding cycle.

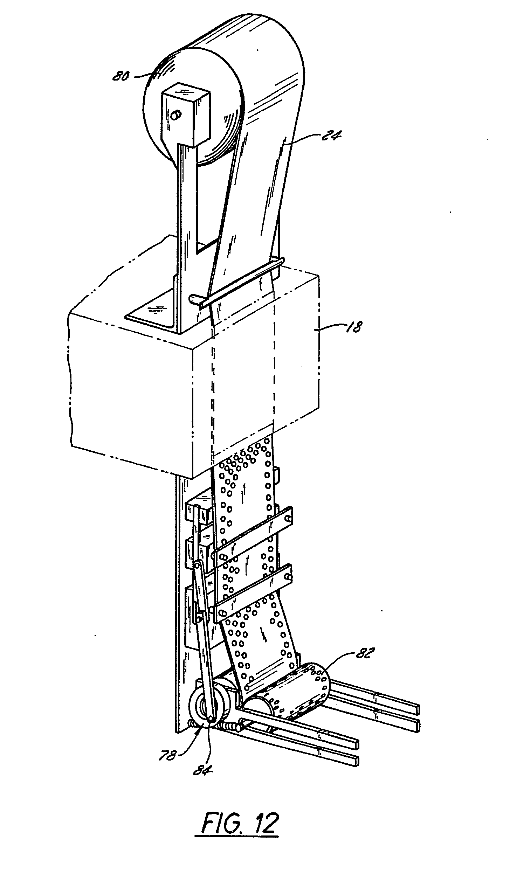

In using multi-cavity molds 77, a large quantity of media strip 24 is required. Therefore, the media strip 24 must be advanced after each molding cycle to provide uncut portions. In order to accomplish such advancement, advancement mechanism 78 is provided. Media strip advancement mechanism 78 comprises an output reel 80 (best seen in FIGURES 1 and 12) having a length of media strip 24 thereon. A take-up reel 82 is oppositely disposed from output reel 80 with media strip 24 being disposed between take up reel 82 and output reel 80 through female mold member 18. A mechanical winding mechanism 84 advances media strip 24 a predetermined distance following each molding cycle.

The previously mentioned filter 70 preferably comprises a hydrophobic air vent utilized in conjunction with intravenous needles such as intravenous needle 88. Filter assembly 70 comprises an upper tubular portion 72, a lower tubular portion 74 axially aligned therewith, with upper tubular portion being larger in outside diameter than the lower tubular portion. The upper tubular portion has an annular rim 90 disposed proximate to the junction 92 between upper tubular portion 72 and lower tubular portion 74. A circular hydrophobic filter member 94, which corresponds to die cut media portion 14, is normally disposed within upper tubular portion 72 and is sealed about its periphery 96 to annular rim 90. Preferably, filter 94 is sealed to annular rim 90 during injection molding of assembly 70.

Hydrophobic filter member 94 preferably comprises porous polyethylene terepthalate. Filter assembly 70 is preferably constructed of polyethylene, but polypropylene or any commonly known thermoplastic resin may be used as long as assembly 70 is translucent, to allow viewing of blood flow during venipuncture. In this regard the lower tubular portion 74 of assembly 70 is of the proper inside diameter for telescopic reception and attachment to an intravenous needle hub 96. Needle 88 is preferably hollow so that when venipuncture is performed, blood flows through needle 88, needle hub 96 and into filter assembly 70. Hydrophobic filter 94 prevents passage of blood therethrough, but allows air to vent so as to prevent an air lock which would prevent the flow of blood. Hydrophobic filter member 94 is additionally supported within lower tubular portion 74 by a plurality of support strut members 98 integrally formed therein and sealed to filter member 94.

The foregoing description and drawings merely explain and illustrate the invention as shown and the invention is not limited thereto except insofar as those skilled in the art having the disclosure before them are able to make modifications and variations therein without departing from the scope of the invention.

CLAIMS

1. Apparatus for injection molding a thermoplastic article (12) having an insert-molded media portion (14) contained therein comprising:

a female mold member (18);

a male mold member (16) reciprocally mounted relative to said female mold member (18) and adapted for mating engagement therewith;

means for moving said male mold member (16) and said female mold (18) member into a predetermined molding position or into a discharge position;

said male and female mold members (16, 18) in said molding position cooperating to provide a molding cavity shaped complementary to said article (12);

means for filling said molding cavity with plastic resin; and

enjector means (20) for the expulsion of said article (12) from said apparatus, following molding thereof;

characterized in that it further comprises:

die cut means (22) integral for the die cutting of a portion (14) of a media strip (24) disposed within said female mold member (18); and

core pin means (26) for the movement of said portion (14) of said media strip (24) within said apparatus to a selected position subsequent to die cutting and prior to injection molding of said article (12).

2. The apparatus as claimed in Claim 1, characterized in that said male mold member (16) includes a rigid support shaft (30) extending perpendicularly therefrom, whereby said rigid support shaft (30) may be selectively positioned within said female mold member (18) in a first position proximate to said die cut means (22) adapted for cooperating with said die cut means (22) in die cutting of said media strip (24), and in a second position adapted for cooperating with said core pin means (26) in positioning of said die cut media portion (14) within said mold during injection molding, so as to injection-mold said article (12) about said die cut media portion (14).

3. The apparatus as claimed in Claim 2, characterized in that said female mold member (18) is slidably displaceable relative to said die cut means (22) so as to force said die cut means (22) through said media strip (24), thereby die cutting a portion (14) thereof.

4. An apparatus as claimed in Claim 1, characterized in that said mold is a multi-stage, reciprocal motion mold for injection molding thermoplastic articles (12) and said female mold member (18) is adapted for abutment against and enclosure of a portion of said male mold member (16), and in that said die cut means (22) are configured and arranged for the die cutting of a portion (14) of media strip (24) disposed within said mold; and in that said core pin means (26) are constructed and arranged for the selective movement of said media portion (14) from its initial position (28) following die cutting to a position (45) within said mold adapted for injection molding of said media portion (14) within said thermoplastic article (12), and in that the apparatus further comprises:

core pin base means (46) constructed and arranged for selectively moveing or fixedly supporting said core pin member (26);

a rigid support shaft (30) extending axially from said male mold member (16) and reciprocally moveable in conjunction therewith, said rigid support shaft (30) being constructed and arranged for supporting said media portion (14) during die cutting and during movement of said media portion (14) within said

0085885

said mold, whereby said media portion (14) may be die cut and moved to said selected position (45) and said thermoplastic article (12) injection molded thereabout; and

enjector base means (44) constructed and arranged for reciprocal movement and alternatively fixed support of said ejector means (20).

5. The apparatus as claimed in Claims 1 and 4, characterized in that said means for moving said male and female mold members (16, 18) comprise:

a plurality of tubular slide members (48,50,52,54) supporting said male and female mold members (16, 18), said slide members being constructed and arranged for facilitating selective reciprocal movement of said male and female mold members (16,18) during cycling of said multi-stage reciprocal motion mold; and hydraulic piston means (56) for effecting reciprocal motion of said male mold member (16) and said female mold member (18).

6. The apparatus as claimed in Claims 4 and 5, characterized in that said ejector base means (44) and said core pin base means (46) are slidably mounted on said plurality of tubular slide members (48, 50), and said apparatus further includes:

mechanical means for effecting the selective reciprocal movement of said ejector base means (44) and said core pin base means (46).

7. The apparatus as claimed in Claims 1 or 4, characterized in that said ejector means (20) comprise:

a tubular ejector shaft member (21) extending into said female mold member (18) constructed and arranged for selective slidable movement therethrough so as to forceably eject said injection molded thermoplastic article (12) upon completion of said molding cycle.

- 19 -

0085885

8. The apparatus as claimed in Claims 1 and 7, characterized in that said die cut means (22) comprises:

a beveled surface (60) circumscribing the distal end (62) of said tubular ejector shaft member (21) constructed and arranged for puncturing and thereby die cutting said media strip (24) disposed within said mold;

a gripper plate (64) reciprocally mounted within said female mold member (18) constructed and arranged for compression against and fixation of said media strip (24) within said female mold member (18) when said male and female mold members (16,18) are abutted against each other;

said gripper plate (64) having an axial tubular port (66) constructed and arranged for telescopic reception of said tubular ejector shaft (21) therethrough;

said tubular ejector shaft (21) having an inside diameter slightly larger than the outside diameter of said rigid support shaft (30) whereby said rigid support shaft (30) may be abutted against said tubular port (66), said media strip (24) proximate said tubular port (66) and said tubular ejector shaft (21) forced through said media strip (24) and about said rigid support shaft (30), said die cut portion of said media strip (24) being fixedly gripped between said core pin (26) and said rigid support shaft (30).

9. The apparatus as claimed in Claims 1 or 4 or 8, characterized in that said rigid support shaft (30) includes a flattened distal end (68) adapted for abutment against said core pin member (26) thereby gripping said die cut portion of said media strip (24) between said rigid support shaft (30) and said core pin member (26).

10. A process for making an injection molded article (12) like a filter (70) with an upper tubular portion (72), a lower tubular portion (74) and filter fabric (76) disposed intermediate said upper and lower portions (72,74), said process being characterized in that it comprises the steps of:

    providing two half molds (16,18), each of which is shaped internally so as to produce one of said tubular portions (72,74);

    providing die cutting means (22) projecting into the interior of one of said half molds (16,18);

    positioning filter fabric (76) through said two half molds (16,18);

    closing said two half molds (16,18) together;

    penetrating and die cutting said fabric (76) with said die cutting means (22);

    gripping said fabric (76) thereby die cut between a slidable core pin (26) axially disposed within the mold (38) and a selectively moveable rigid support shaft (30) linearly aligned therewith; and

    moving the fabric (76) thereby die cut to a desired position within said mold by means of said slidable core pin (26) axially disposed within said mold (38) and said selectively moveable rigid support shaft (30);

    injecting plastic material into said two half molds (16,18) and about said filter fabric (76) so as to form an injection molded filter (70);

    cooling said filter (70) and said mold (38);

    opening said mold (38); and

    ejecting said filter (70).

11. A method for making a thermoplastic article (12) having an insert molded media portion (14) contained therein, characterized in that it comprises:

providing two mold halves (16,18), each of which is so shaped internally as to produce a portion of said article (12), said mold halves (16,18) having ejector means (20) and die cutting means (22) contained therein;

providing a media strip (24) which extends through an appropriately shaped slot in one of said mold halves (16,18);

closing said mold halves (16,18) together;

gripping said media strip (24);

die cutting said media strip (24) so as to form said media portion (14);

moving said media portion (14) to a selected position within the mold (38);

injecting thermoplastic material into said mold halves (16,18) so as to form said thermoplastic article (12);

cooling said thermoplastic article (12) and said mold (38);

opening said mold (38); and

ejecting said article by means of said ejector means (20).

12. The method as claimed in Claim 11, characterized in that said movement of said media portion (14) comprises:

gripping said media portion (14) between a core pin member (26) and a linearly arrayed rigid support shaft (30); and

sliding said core pin member (26) and said rigid support member (30) axially through said mold halves (16,18) to said selected position within said mold (38).

13. The method as claimed in Claim 10 or 11, characterized in that it comprises the additional step of:

advancing said media strip (14) following the forming of

each thermoplastic article (12).

14.    The method as claimed in Claim 10 or 11, characterized in that a plurality of thermoplastic articles (12) are produced by said mold halves (16,18).

15.    The apparatus as claimed in Claim 1, characterized in that said severable male mold member (16) and said severable female mold member (18) comprise a plurality of cavities for the simultaneous molding of a plurality of said thermoplastic articles (12); and in that

said apparatus further comprises a plurality of said ejector means (20), die cut means (22) and core pin means (26) for said simultaneous molding of said plurality of thermoplastic articles (12).

16.    The apparatus as claimed in Claims 1 or 15, characterized in that it includes advancement means (78) for advancing said media strip (14) after the completion of one molding cycle.

17.    The apparatus as claimed in Claim 16, characterized in that said advancement means (78) comprises:

an output reel (80) having a length of media strip (14) wound thereon;

a take-up reel (82) oppositely disposed from said output reel (80) with said media strip (14) being disposed between said take-up reel (82) and said output reel (80) through said female mold part (18); and

mechanical winding means (84) for advancing said media strip (14) a minimum predeterminded distance following completion of each molding cycle.

18.    The apparatus as claimed in Claim 15, characterized in that said plurality of said ejector means (20), die cut means (22) and core pin means (26) are linearly arrayed across said mold (38) so as to utilize a substantial portion of said media strip (14) upon each molding cycle.

19. A hydrophobic air vent assembly for intravenous needles, characterized in that it comprises:

an upper tubular portion (72);

a lower tubular portion (74) axially aligned with said upper tubular portion (72), said upper tubular portion (72) being larger in outside diameter than said lower tubular portion (74); and having an annular rim (90) disposed proximate to the junction with said lower tubular portion (74) constructed and arranged for sealable attachment to the periphery of a circular hydrophobic filter member (94).

20. The air vent assembly as claimed in Claim 19, characterized in that it further comprises:

a plurality of support strut members (98) integrally formed within said lower tubular portion (74), constructed and arranged for supporting said hydrophobic filter member (94).

21. The air vent assembly as claimed in Claim 19, characterized in that said hydrophobic filter member (94) and said upper and lower tubular portions (72,74) are constructed as a modular unit, said hydrophobic filter member (94) being integrally sealed about its periphery to said annular rim (90) by means if the adhesion of said annular rim (90) to said filter member (94) during molding of said air vent assembly.

22. The air vent assembly as claimed in Claim 19, characterized in that said circular hydrophobic filter member (94) comprises porous polyethylene terepthalate.

23. The air vent assembly as claimed in Claim 19, characterized in that said lower tubular portion (74) is constructed and arranged for telescopic reception of and attachment to an intravenous needle hub (96).

_FIG. 1_

_FIG. 13_

_FIG. 14_

FIG. 2

FIG. 3

FIG. 4

FIG. 5

2/7

0085885

FIG. 6

FIG. 8

FIG. 7

FIG. 9

3/7

0085885

0085885

_FIG. 10_

5/7

FIG. 11

FIG. 12

7/7

_FIG. 15_
_PRIOR ART_

_FIG. 18_
_PRIOR ART_

_FIG. 17_
_PRIOR ART_

_FIG. 16_
_PRIOR ART_